# DEMANDE DE BREVET EUROPEEN

(11) **EP 0 727 633 A1**
(43) Date de publication de la demande: **21.08.1996**
(21) Numéro de dépôt: 95120015.3
(22) Date de dépôt: 19.12.1995
(51) Int. Cl.: F28F 9/26, F16L 13/007

(54) **Echangeur de chaleur à assemblage d'élémants tubulaires emboîtes, notamment pour véhicules automobiles, et procédé pour sa fabrication**

(30) Priorité: 22.12.1994 FR 9415512
(71) Demandeur: Valeo Climatisation, 78321 La Verrière (FR)
(72) Inventeur: Chevallier, Christophe, F-72000 Le Mans (FR)
(74) Mandataire: Gamonal, Didier

(57) **Abrégé**

L'invention concerne un échangeur de chaleur comprenant un faisceau de tubes obtenu par assemblage d'éléments tubulaires (1,4) par emboîtement.

L'assemblage résulte de la contraction thermique de la dimension radiale externe d'une extrémité mâle (5) par abaissement de température puis par dilatation thermique et/ou de la dilatation thermique de la dimension radiale interne d'une extrémité femelle (3) par élévation de température puis de sa contraction thermique.

Application notamment aux évaporateurs ou aux condenseurs faisant partie d'installations de chauffage-climatisation de véhicules automobiles.

## Description

L'invention concerne un échangeur de chaleur à assemblage d'éléments tubulaires emboîtés, notamment pour véhicules automobiles, et un procédé pour sa fabrication.

On connaît déjà des échangeurs de chaleur qui comprennent un faisceau de tubes avec assemblage d'éléments tubulaires par emboîtement d'une extrémité mâle d'un premier élément tubulaire dans une extrémité femelle d'un second élément tubulaire.

Les premiers éléments tubulaires peuvent être des tubes de raccordement, par exemple en forme de crosses, et les seconds éléments tubulaires peuvent être des tubes droits et parallèles constituant le faisceau proprement dit et traversant des ailettes, comme enseigné notamment par les Brevets français 89 15309 et 90 16168.

Un tel échangeur peut être utilisé notamment comme évaporateur ou condenseur dans une installation de chauffage et de climatisation d'un véhicule automobile, les tubes de l'échangeur étant parcourus par un fluide frigorigène propre à échanger de la chaleur avec un flux d'air qui balaie le faisceau.

Pour réaliser un tel assemblage, une solution connue consiste à emboîter les extrémités mâles dans les extrémités femelles correspondantes et à procéder ensuite à leur liaison étanche par une opération de brasage, par exemple par passage dans un brin de brasure.

Une autre solution connue consiste, après emboîtement des extrémités mâles et femelles correspondantes, à déplacer axialement des bagues de sertissage qui assurent une déformation radiale simultanée de la paroi des extrémités mâle et femelle préalablement emboîtées.

Ces deux solutions nécessitent des outillages complexes et des phases opératoires difficiles à mettre en oeuvre.

L'invention vise à éviter ces inconvénients en proposant une troisième solution.

Elle propose à cet effet un échangeur de chaleur à assemblage d'éléments tubulaires du type défini en introduction.

Selon l'invention, l'assemblage résulte de variations de la dimension radiale de l'une au moins des extrémités mâle et femelle, sous l'effet de variations de température, cette dimension radiale passant d'une valeur initiale à une valeur transitoire sous l'effet d'une variation de température de sens donné et tendant à revenir vers sa valeur initiale, après emboîtement, pour atteindre une valeur finale sous l'effet d'une variation de température de sens opposé.

Ainsi, l'assemblage de l'extrémité mâle et de l'extrémité femelle résulte de phénomènes de contraction et de dilatation, ce qui permet d'assurer une liaison inamovible et parfaitement étanche.

Plus particulièrement, l'assemblage d'une extrémité mâle et d'une extrémité femelle résulte de la contraction thermique de la dimension radiale externe de l'extrémité mâle par abaissement de température puis de sa dilatation thermique par élévation de température et/ou de la dilatation thermique de la dimension radiale interne de l'extrémité femelle par élévation de température puis de sa contraction thermique par abaissement de température.

De façon avantageuse, on réalise l'assemblage en faisant subir des variations dimensionnelles à la fois à la dimension externe de l'extrémité mâle et à la dimension interne de l'extrémité femelle.

Selon une autre caractéristique de l'invention, la dimension radiale externe initiale de l'extrémité mâle est supérieure à la dimension radiale interne initiale de l'extrémité femelle, tandis que la dimension radiale externe finale de l'extrémité mâle est égale à la dimension radiale interne finale de l'extrémité femelle.

Dans une forme de réalisation préférée de l'invention, le premier élément tubulaire est un tube de raccordement, par exemple en forme de crosse, et le second élément tubulaire est un tube droit faisant partie d'un faisceau.

L'invention s'applique ainsi tout particulièrement à un échangeur du type évaporateur ou condenseur propre à être parcouru par un fluide frigorigène pour faire partie d'une installation de chauffage-climatisation de véhicule automobile.

Sous un autre aspect, l'invention concerne un procédé de fabrication d'un échangeur de chaleur du type défini précédemment, ce procédé comprenant les opérations suivantes :
- soumettre l'une au moins des extrémités mâle et femelle à une variation de température de sens donné, en sorte que sa dimension radiale initiale atteigne une valeur transitoire,
- emboîter l'extrémité mâle dans l'extrémité femelle, et
- soumettre l'extrémité mâle et/ou l'extrémité femelle à une variation de température de sens opposé, en sorte que sa dimension radiale tende à revenir vers sa dimension initiale pour atteindre une valeur finale, les deux extrémités mâle et femelle étant assemblées de façon inamovible par serrage mutuel.

Selon une autre caractéristique de l'invention, on soumet l'extrémité mâle à un abaissement de température à partir de la température ambiante dans des conditions contrôlées pour provoquer sa contraction et, après emboîtement, on laisse revenir cette extrémité mâle progressivement à la température ambiante.

Pour abaisser la température de l'extrémité mâle, on la fait passer avantageusement dans un bain de gaz liquéfié, par exemple d'azote liquide.

Selon une autre caractéristique de l'invention, on soumet l'extrémité femelle à une élévation de température à partir de la température ambiante, dans des conditions contrôlés, pour provoquer sa dilatation et, après emboîtement, on laisse revenir cette extrémité femelle progressivement à la température ambiante.

De façon avantageuse, on élève la température de l'extrémité femelle par passage dans un four de cuisson à une température élevée.

Dans la description qui suit, faite seulement à titre d'exemple, on se réfère au dessin annexé, sur lequel :
- la figure 1 est une vue d'extrémité, avec coupe partielle, d'un échangeur de chaleur, du type évaporateur ou condenseur, comprenant un faisceau de tubes avec assemblage d'éléments tubulaires emboîtés; et
- les figures 2A, 2B, 2C et 2D sont des vues en coupe montrant l'assemblage d'une extrémité mâle et d'une extrémité femelle par emboîtement au cours de quatre phases successives du procédé.

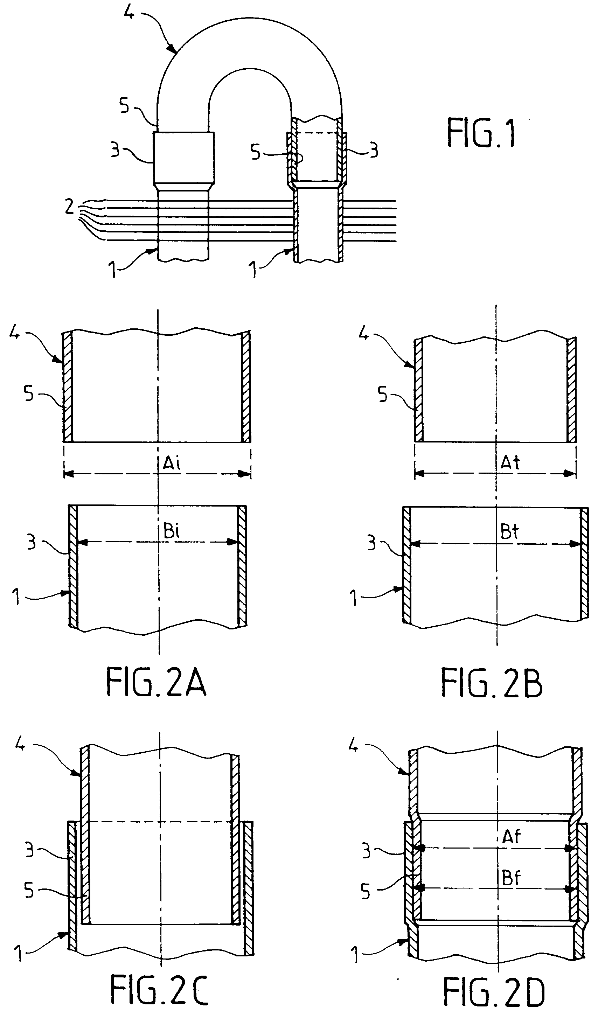

L'échangeur de chaleur représenté à la figure 1 est, dans l'exemple, un évaporateur ou un condenseur comprenant un faisceau composé d'une multiplicité d'éléments tubulaires droits 1 disposés parallèlement entre eux et traversant une série d'ailettes parallèles 2. Ces éléments tubulaires comportent chacun une extrémité mâle élargie 3. Les éléments 1 sont réunis entre eux par des éléments tubulaires incurvés 4, encore appelés crosses, ayant chacun deux extrémités mâles opposées 5 propres à s'emboîter dans les extrémités femelles correspondantes 3 des éléments tubulaires 1 pour assurer une liaison étanche permettant une circulation de fluide frigorigène dans les tubes.

Dans le cas d'un tel échangeur de chaleur, le fluide circulant est un fluide frigorigène qui échange de la chaleur avec un flux d'air qui balaie le faisceau.

Comme on va le voir plus loin, l'assemblage des extrémités mâles 5 par emboîtement dans les extrémités femelles 3 est obtenu, selon l'invention, par une combinaison d'opérations de contraction et de dilatation thermique, dans des conditions contrôlées de température, assurant une liaison inamovible et étanche.

Dans l'exemple, les extrémités mâle 5 et femelle 3 sont circulaires, mais l'invention pourrait également s'appliquer à des extrémités à contour non circulaire.

Comme montré à la figure 2A, l'extrémité mâle 5 possède une dimension radiale initiale (diamètre externe) Ai de valeur donnée et l'extrémité femelle 3 possède une dimension radiale initiale (diamètre interne) Bi, de valeur donnée, de telle façon que Ai soit inférieur à Bi. Ainsi, les deux dimensions de départ sont incompatibles et ne permettent pas l'emboîtement de l'extrémité mâle 5 dans l'extrémité femelle 3.

Conformément à l'invention, on fait subir une contraction thermique à l'extrémité mâle 5 en abaissant sa température, par exemple par plongée dans un bain d'azote liquide, ce qui fait que la dimension radiale de l'extrémité mâle 5 atteint une valeur transitoire Aₜ inférieure à Aᵢ.

Par ailleurs, l'extrémité femelle 5 est soumise à une élévation de température, par exemple par passage dans un four de cuisson ayant une température élevée, si bien que sa dimension radiale subit une expansion thermique pour atteindre une valeur transitoire Bₜ supérieure à Bᵢ.

Par un choix approprié des conditions de température, on s'arrange pour que Aₜ soit inférieure à Bₜ en vue de permettre l'emboîtement, comme montré à la figure 2B.

Ensuite, et sans attendre, on emboîte l'extrémité mâle 5 à l'intérieur de l'extrémité femelle 3, comme montré à la figure 2C.

Puis, on laisse l'équilibre thermique se réaliser, un échange thermique s'opérant entre l'extrémité femelle 3 préalablement chauffée et l'extrémité mâle 5 préalablement refroidie.

Au fur et à mesure que l'équilibre se poursuit et que l'on atteint la température ambiante, l'extrémité mâle 5 se dilate radialement, tandis que l'extrémité femelle 3 se contracte radialement. La dimension radiale de l'extrémité mâle tend à revenir vers sa valeur initiale et, de même, la dimension radiale de l'extrémité femelle tend à revenir vers sa valeur initiale, à condition bien entendu de ne pas avoir dépassé la limite élastique des matériaux des éléments tubulaires.

Toutefois, du fait que Ai est supérieur à Bi, les deux extrémités ne peuvent revenir à leur valeur initiale.

La dimension radiale de l'extrémité mâle 5 atteint une valeur finale Af, qui est supérieure à At mais inférieure à Ai, tandis que la dimension radiale de l'extrémité femelle atteint une valeur finale Bf qui est inférieure à Bt mais supérieure à Bi, comme montré à la figure 2D.

Il en résulte un serrage des deux extrémités mâle et femelle qui sont ainsi emboîtées de façon inamovible et étanche.

Dans une forme de réalisation préférée de l'invention, on préfère effectuer à la fois des opérations de modification dimensionnelle sur les extrémités mâles et sur les extrémités femelles.

Les opérations d'assemblage peuvent être effectuées simultanément sur tous les éléments tubulaires du faisceau de l'échangeur de chaleur.

## Revendications

1. Echangeur de chaleur du type comprenant un faisceau de tubes avec assemblage d'éléments tubulaires par emboîtement d'une extrémité mâle (5) d'un premier élément tubulaire (4) dans une extrémité femelle (3) d'un second élément tubulaire (1),
caractérisé en ce que l'assemblage résulte de variations de la dimension radiale de l'une au moins des extrémités mâle (5) et femelle (3), sous l'effet de variations de température, cette dimension radiale passant d'une valeur initiale (Aᵢ, Bᵢ) à une valeur transitoire (Aₜ, Bₜ) sous l'effet d'une variation de température de sens donné et tendant à revenir vers sa valeur initiale, après emboîtement, pour atteindre une valeur finale (A_{f}, B_{f}) sous l'effet d'une variation de température de sens opposé.

2. Echangeur de chaleur selon la revendication 1, caractérisé en ce que l'assemblage résulte de la contraction thermique de la dimension radiale externe (Ai) de l'extrémité mâle (5) par abaissement de température puis de sa dilatation thermique par élévation de température et/ou de la dilatation thermique de la dimension radiale interne (Bi) de l'extrémité femelle (3) par élévation de température puis de sa contraction thermique par abaissement de température.

3. Echangeur de chaleur selon l'une des revendications 1 et 2, caractérisé en ce que la dimension radiale externe initiale (Ai) de l'extrémité mâle (5) est supérieure à la dimension radiale interne initiale (Bi) de l'extrémité femelle (3) et en ce que la dimension radiale externe finale (Af) de l'extrémité mâle est égale à la dimension radiale interne finale (Bf) de l'extrémité femelle.

4. Echangeur de chaleur selon l'une des revendications 1 à 3, caractérisé en ce que le premier élément tubulaire (4) est un tube de raccordement, par exemple en forme de crosse, et le second élément tubulaire (1) est un tube droit du faisceau.

5. Echangeur de chaleur selon l'une des revendications 1 à 4, caractérisé en ce qu'il constitue un évaporateur ou un condenseur propre à être parcouru par un fluide frigorigène et à faire partie d'une installation de chauffage-climatisation de véhicule automobile.

6. Procédé de fabrication d'un échangeur de chaleur selon l'une des revendications 1 à 5, caractérisé par les opérations suivantes :
- soumettre l'une au moins des extrémités mâle (5) et femelle (3) à une variation de température de sens donné, en sorte que sa dimension radiale initiale (Ai, Bi) atteigne une valeur transitoire (Af, Bf),
- emboîter l'extrémité mâle (5) dans l'extrémité femelle (3),
- soumettre l'extrémité mâle (5) et/ou l'extrémité femelle (3) à une variation de température de sens opposé, en sorte que sa dimension radiale tende à revenir vers sa dimension initiale pour atteindre une valeur finale (Af, Bf), les deux extrémités étant assemblées de façon inamovible par serrage mutuel.

7. Procédé selon la revendication 6, caractérisé en ce que l'on soumet l'extrémité mâle (5) à un abaissement de température à partir de la température ambiante, dans des conditions contrôlées, pour provoquer sa contraction et, après emboîtement, on laisse revenir l'extrémité mâle progressivement à la température ambiante.

8. Procédé selon la revendication 7, caractérisé en ce que l'on abaisse la température de l'extrémité mâle (5) par passage dans un bain de gaz liquéfié, par exemple d'azote liquide.

9. Procédé selon l'une des revendications 6 à 8, caractérisé en ce que l'on soumet l'extrémité femelle (3) à une élévation de température à partir de la température ambiante, dans des conditions contrôlées, pour provoquer sa dilatation et, après emboîtement, on laisse revenir l'extrémité femelle progressivement à la température ambiante.

10. Procédé selon la revendication 9, caractérisé en ce qu'on élève la température de l'extrémité femelle (5) par passage dans un four de cuisson à température élevée.
